# EUROPÄISCHE PATENTANMELDUNG

(11) **EP 1 980 983 A1**
(43) Veröffentlichungstag der Anmeldung: **15.10.2008**
(21) Anmeldenummer: 07007561.9
(22) Anmeldetag: 12.04.2007
(51) Int. Cl.: G06Q 20/00, G07F 7/00, G06F 21/00, G07F 7/10, H04L 9/32

(54) **Verfahren zur Kommunikation für Online-Transaktionen und zugehöriges Kommunikationsgerät**

(71) Anmelder: Siemens Schweiz AG, 8047 Zürich (CH)
(72) Erfinder: Clerc, André, 8112 Otelfingen (CH)
(74) Vertreter: Kley, Hansjörg

(57) **Zusammenfassung**

Online-Transaktionen zwischen einem Rechner (1) und einem Dienste-Anbieter (2) tragen das Risiko, dass zwar zwischen Rechner (1) und Dienste-Anbieter (2) eine gesicherte Verbindung (15) vorhanden ist, jedoch zwischen Rechner (1) und Benutzer (40) durch Malware die Kommunikation offen ist. Zur Sicherstellung einer End-to-End - Sicherung zwischen Benutzer (40) und Dienste-Anbieter (2) wird ein Verfahren und ein portables Kommunikationsgerät (3) vorgeschlagen, bei denen einerseits Ausgaben am Bildschirm (31) in Form von von Menschen nicht lesbaren Mustern (33) erfolgen und Dateneingaben unmittelbar nach der Tastatur (30) aber noch vor dem Rechner (1) verschlüsselt werden.

## Beschreibung

Die Erfindung bezieht sich auf ein Verfahren für Online-Transaktionen zwischen einem Rechner und einem Dienste-Anbieter nach dem Oberbegriff der Patentansprüche 1 und 3. Die Erfindung bezieht sich ferner gemäss dem Oberbegriff des Patentanspruches 9 auf ein Kommunikationsgerät zu einem Rechner an den ein Bildschirm und eine Tastatur angeschlossen ist, wobei dieses Kommunikationsgerät für Online-Transaktionen über den Rechner vorgesehen ist.

Elektronische Online-Dienste für E-Banking, Bestellen von Medien oder Dienstleistungen haben eine grosse Verbreitung gefunden. Von besonderer Bedeutung ist die sichere Abwicklung dieser administrativen Vorgänge.

Zur sicheren Abwicklung solcher Online-Vorgänge ist in EP 1 255 178 B1 [2] eine Sicherheitsvorrichtung offenbart. Bei der Ausgabe eines Passwortes nach den Challenge-/Responseprinzip an einem Bildschirm erfolgt dies nicht im Klartext, sondern in Form eines Musters - auch Flickering genannt -. Die vorgenannte Sicherheitsvorrichtung kann das vom Bildschirm ausgegebene Muster erkennen und den Benutzer auffordern, zur Authentifizierung einen Code einzugeben oder mittels eines biometrischen Sensors seine Identität zu offenbaren. Daraufhin wird von der Sicherheitsvorrichtung ein Passwort ausgegeben, das von der betreffenden Person an der Tastatur einzugeben ist.

Von der gleichen Anmelderin wie bei der vorgenannten Schrift EP 1 255 178 B1 [2] wurde ferner in EP 1 713 230 A1 [1] ein Verfahren vorgeschlagen, das unsichere bzw. ungesicherte Kommunikationswege benutzt, um aufgrund einer übermittelten Identität eines Benutzers diesem über eine sichere Verbindung eine geheime URL zu übermitteln.

Die vorgenannten zwei Lösungen stellen eine Verbesserung dar, sie genügen jedoch den Sicherheitsanforderungen nicht, da ein Rechner grundsätzlich als unsicher zu betrachten ist, d.h. die Anwesenheit von «Malware» ist anzunehmen. Diese Malware ist in der Lage insbesondere Eingaben über die Tastatur zu tracen und über eine Verbindung einem Dritten zugänglich zu machen.

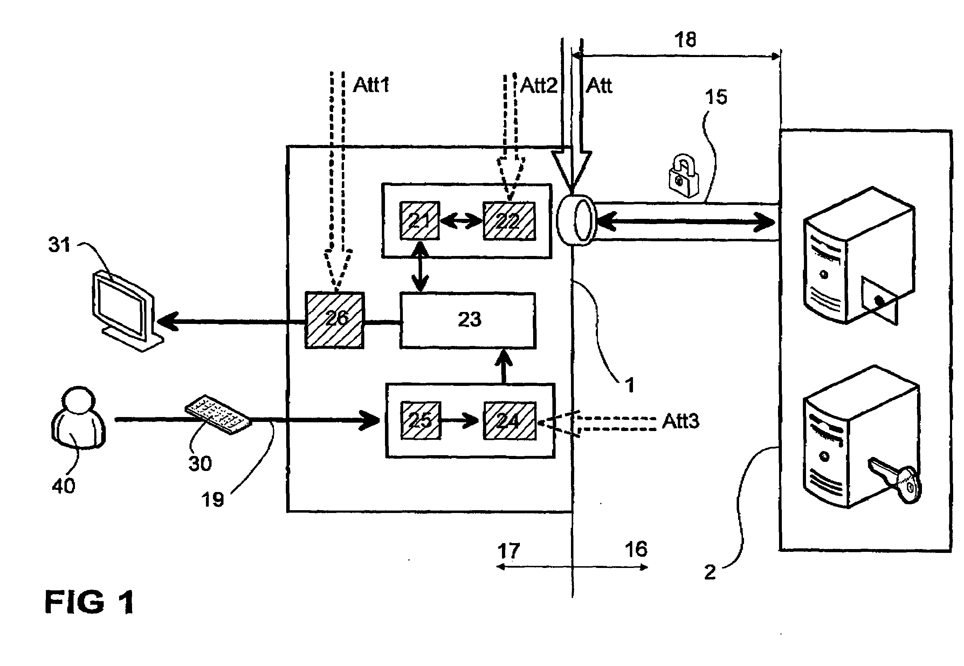

In der Fig. 1 sind die üblichen mit «Att1», «Att2» und «Att3» bezeichneten Angriffspunkte auf einen Rechner 1 bei einem Benutzer 40 zuhause oder in einem Büro dargestellt. Dieser Rechner 1 unterhält eine gesicherte Kommunikationsverbindung 15 mit einem Dienste-Anbieter 2. Bei diesem Rechner 1 wird unterstellt, dass dieser hochgradig kompromittiert ist und somit im folgenden Kontext als kompromittierter Rechner 1 bezeichnet wird. Insbesondere die schraffiert dargestellten «Komponenten» und die Ressourcen dieses Rechners 1 wie Tastatur 30, Maus (nicht dargestellt) und Bildschirm 31 sind von einem beliebigen Punkt aus dem Internet zugreifbar. «Komponenten» heisst hier:
- Malware 21 in Form eines HTTP-Filters;
- Malware 22 in Form einer HTTP-Replace Engine;
- Malware 24 in Form eines Key-Loggers;
- Malware 25 in Form einer Key-Replace-Engine;
- Malware 26 in Form einer Videomaskierung.

Die in EP 1 255 178 B1 [2] offenbarte Sicherheitsvorrichtung erlaubt zweifellos eine sichere Authentifizierung eines Benutzers, der nachfolgende Online-Dialog über einen mit Malware geladenen Rechner 1 ist und bleibt ungeschützt. Dies ist unmittelbar aus der vorangehenden Darstellung gemäss der Figur 1 ersichtlich.

Ausgehend von diesem Stand der Technik stellt sich das Problem, ein Verfahren und ein Kommunikationsgerät anzugeben, das Online-Transaktionen auch über mit Malware geladenen Rechnern erlaubt, ohne dass diese Malware in der Lage ist, Daten im Klartext aus einer Online-Transaktion an eine dritte Stelle weiterzuleiten.

Diese Aufgabe wird erfindungsgemäss durch die im Patentanspruch 1, 3 und 9 angegebenen Merkmale gelöst.

Durch die Führung des ganzen Dialoges zwischen Benutzer und Dienste-Anbieter über eine End-to-End-Sicherung ist es jeder Art von Malware nicht mehr möglich die Transaktionen so zu aufzuzeichnen (logging, tracing), dass damit von einem anderen Rechner ein missbräuchlicher Zugriff auf Daten im Klartext erfolgen kann. End-to-End-Sicherheit bedeutet eine verschlüsselte Kommunikation von Dienste-Anbieter bis zum Dienste-Nutzer (=Person). Diese bidirektionale End-to-End Sicherung verunmöglicht einer jeden Malware, die für einen Benutzer übermittelten Daten im Klartext abzufangen und dadurch diese Daten - wie z.B. ein Kontostand - missbräuchlich zu verwenden.

Gemäss einer Ausführungsform der Erfindung kann insbesondere für Testzwecke vorgesehen werden, dass die Ausgaben am Bildschirm des Rechners sowohl in verschlüsselter Form (Muster) wie auch im Klartext erfolgt. Dadurch kann für einen Benutzer die Authentizität der ausgegebenen Daten unmittelbar überprüft werden. Auf diese Weise ist eine absolute Vertraulichkeit der bidirektional übermittelten Daten allerdings nur noch unidirektional sichergestellt.

In einer für das breite Publikum vorgesehenen Ausführungsform weist das Kommunikationsgerät einen Kartenleser auf, in den eine anwendungs- und/oder personenspezifische Smartcard eingeschoben werden kann. Die Smartcard enthält dabei einen Krypto-Controller. Die ganze Verschlüsselung findet dabei innerhalb dieser Smartcard statt. Bedienelemente und/oder ein biometrischer Sensor des Kommunikationsgerätes erlauben eine sichere Authentifizierung des Benutzers in vergleichbarer Weise, wie diese beim Stand der Technik gemäss EP 1 255 178 B1 [2] der Fall ist. Durch diese Ausführungsform ist das Kommunikationsgerät entpersonalisiert und kann als Massenprodukt vertrieben werden. Jeder Dienste-Anbieter kann durch Distribution einer auf den anzubietenden Dienst angepassten Smartcard seinen Kunden massgeschneiderte On-Line Transaktionslösungen anbieten, ohne dass der Kunde irgendwelche Modifikationen an seinem Rechner vornehmen muss, gleichzeitig aber durch die Verschiebung der End-to-End - Sicherung bis zum Kunden/Benutzer ein Höchstmass an Sicherheit gewährleisten.

Vorteilhafte Weiterbildungen der Erfindung sind Gegenstand der abhängigen Ansprüche.

Die Erfindung wird nachstehend anhand der Zeichnung erläutert. Es zeigen:
- Figur 1: Darstellung der üblichen Angriffspunkte in einem/auf einen kompromittierten Rechner;
- Figur 2: Darstellung der Anzeigen an einem Bildschirm;
- Figur 3: Darstellung der Anzeige an einem Bildschirm zusammen mit einer prinzipiellen Ausführungsform des erfindungsgemässen Kommunikationsgerätes;
- Figur 4: Detaillierte Darstellung der Verbindungen einer bevorzugten Ausführungsform des erfindungsgemässen Kommunikationsgerätes.

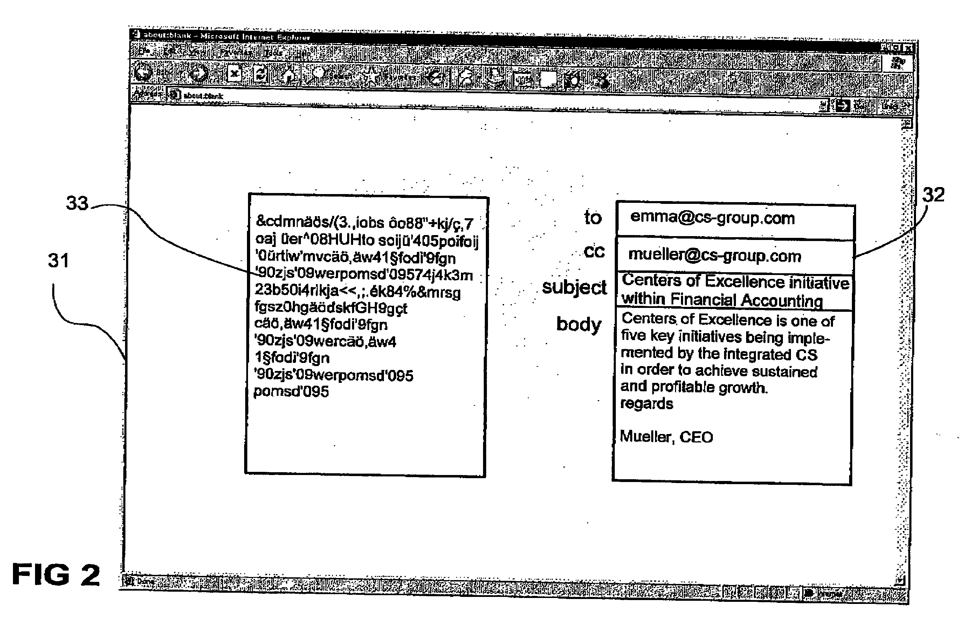

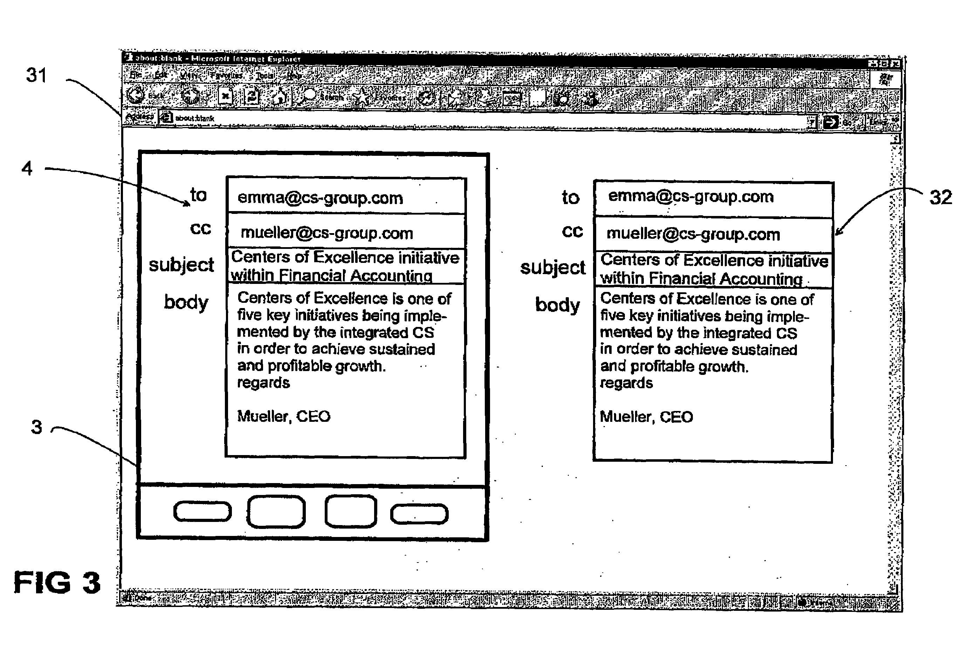

Die Beschreibung von Ausführungsformen der vorliegenden Erfindung basiert stets für einen infizierten oder hochgradig kompromittierten Rechner 1, wie er in der Fig. 1 dargestellt ist. Die Ausgabe von Informationen erfolgt über einen Bildschirm 31 wie in den Figuren 2 bis 4 dargestellt, wobei erfindungswesentliche Merkmale des Verfahrens wie auch des Kommunikationsgerätes dazu weiter unten erläutert werden.

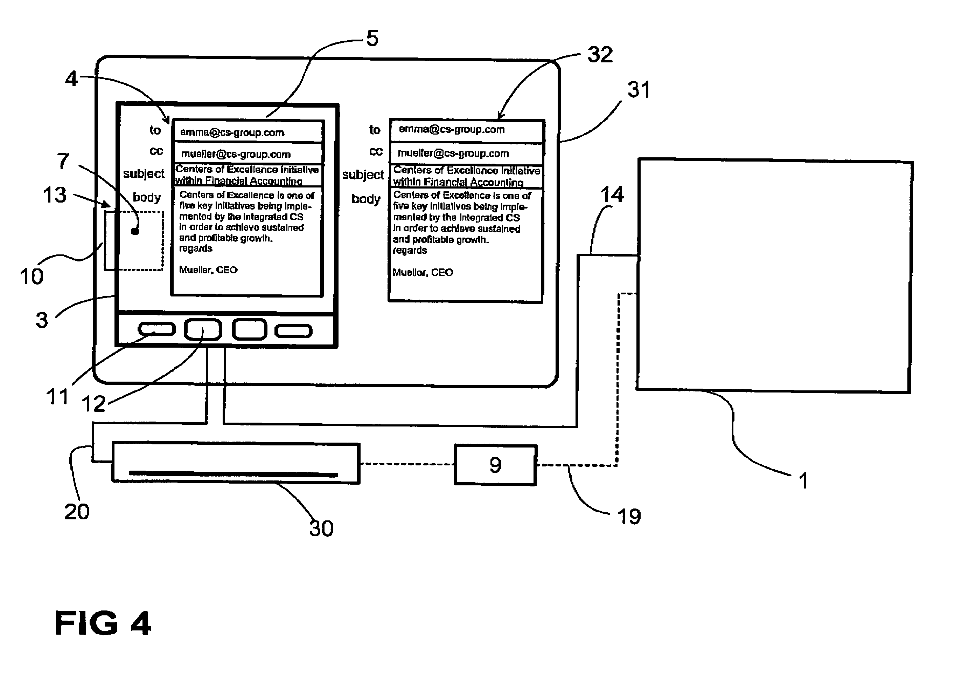

In Figur 4 ist ein Bildschirm 31 eines infizierten Rechners 1 dargestellt. An diesen Bildschirm 31 ist ein Kommunikationsgerät 3 - im folgenden kurz Gerät 3 genannt - angebracht. Dieses Gerät 3 weist einen photoelektrischen Aufnehmer (nicht dargestellt in den Figuren) auf, der am Bildschirm 31 in verschlüsselter Form angezeigte Information 33 lesen kann. Diese vom photoelektrischen Aufnehmer gelesene Information wird mittels eines Krypto-Controllers entschlüsselt und in Klartextform 4 über ein Anzeigemittel 5 des Gerätes 3 zuhanden eines Benutzers 40 angezeigt. Das Gerät 3 ist portabel ausgebildet und vorzugsweise von einer Grösse im Format zwischen A5 und A6, die ein einfaches Versorgen in einer Innentasche eines Vestons erlaubt. Aufgrund dieser Grösse wird dieses Anzeigemittel 5 bevorzugt ein alphanumerisches Display aufweisen. Denkbar ist auch ein graphikfähiges Anzeigemittel 5, dies ist jedoch für die Ausführung der vorliegenden Erfindung nicht zwingend.

Das Kommunikationsgerät 3 kann wie folgt - nicht abschliessende Aufzählung - am Bildschirm 31 angebracht sein:
- Mechanische Vorrichtung für diesen Zweck, z.B.schwenkbar;
- mit Saugnäpfen;
- am Bildschirm 31 hängend.

Das Gerät 3 ist drahtgebunden oder drahtlos (= «wireless») mit dem Rechner 1 verbindbar, im Falle einer drahtgebundenen Strecke 20,14 ist vorzugsweise eine USB-Strecke vorzusehen. Um dieses Gerät 3 entpersonalisiert auf den Markt zu bringen, weist es einen Kartenleser 7 für eine einzuschiebende Smartcard 10 auf. Auf dieser Smartcard 10 sind die personenspezifischen Daten wie auch in einem Krypto-Controller die zugehörigen Kryptoschlüssel enthalten, die erforderlich sind, die am Bildschirm 31 angezeigte verschlüsselte Information 33 - siehe dazu die Darstellung links in der Fig. 2 - zu entschlüsseln. Ebenso können im Falle der Datenübertragung über die Verbindungen 20, 14 die von der Tastatur 30 herkommenden Daten mittels des auf der Smartcard 10 befindlichen Kryptoschlüssel verschlüsselt werden.

Für die Authentifizierung der der Smartcard 10 zugeordneten Person 40 können auf dem Gerät 3 alternativ oder kumulativ ein biometrischer Sensor oder Bedienelemente angeordnet sein, mit denen eine Interaktion zwischen Person 40 und Gerät 3 vorgenommen werden kann. Die entsprechenden Eingaben können wiederum wahlweise nur innerhalb des Gerätes 3 verarbeitet werden oder in verschlüsselter Form über die USB-Strecke 14 zum Rechner 1 und weiter zum Dienste-Anbieter 2 übermittelt werden. Durch diese Verschlüsselung unmittelbar beim Benutzerinterface ist es jeglicher Malware im Rechner 3 zwar immer noch möglich, die übertragenen Daten über einen anderen Kanal weiter zu leiten, jedoch ist die Information als solche verschlüsselt. Durch die Wahl geeigneter Verschlüsselungsverfahren mit einem ausreichend grossen Schlüssel, ist dies nicht weiter von Bedeutung.

Da ein Benutzer 40 die Eingaben an einem Rechner 1 nach wie vor möglichst an einer Tastatur 30 vornehmen will, ist gemäss einer besonderen Ausführungsform der vorliegenden Erfindung vorgesehen, dass das Tastaturkabel 20 nicht über das Gerät 30 sondern über einen Dongle 9 zu führen, der in die übliche Verbindung 19 zwischen Tastatur und Rechner 1 eingefügt ist. Im Sinne einer einfacheren Handhabung und der Vermeidung von unnötiger Gerätschaft ist die Führung über das Gerät 3 als bevorzugt anzusehen, weil in diesem Fall ggf. die gleiche Verschlüsselung und insbesondere der gleiche Krypto-Controller auf der Karte 10 benutzt werden kann.

Dieser Dongle 9 kann alternativ auch direkt im Rechner 1 eingesteckt sein. In einer weiteren möglichen Ausführungsform kann dieser Dongle 9 zusätzlich eine wireless - Schnittstelle aufweisen, so dass die Verbindung zwischen Tastatur 30 und Rechner 1 einerseits wie auch zwischen Gerät 3 und Rechner 1 drahtlos erfolgt, dies ist in Figur 4 nicht explizit dargestellt, da unmittelbar nachvollziehbar. Weiter wäre es denkbar, dass an der Tastatur eingegebene Daten am Anzeigemittel 5 des Gerätes 3 gespiegelt würden.

Auf dem Ausgabemittel 5 des Gerätes 3 wird die vom Bildschirm entstammende verschlüsselte Information 33 in Klartext 4 dargestellt.

Insbesondere für Testzwecke kann vorgesehen werden, dass die vom Dienste-Anbieter 2 entstammende Information auf dem Bildschirm 31 nicht nur als Muster 33, sondern auch als Klartext 32 dargestellt wird. Auf diese Weise ist unmittelbar ersichtlich, ob Malware 26 in Form von Videomaskierung eingegriffen hat.

Die verschlüsselte Ausgabe am Bildschirm 31 kann alphanumerisch in einem beschränkten Teilbereich erfolgen, wie in Figur 2 mit dem Bezugszeichen 33 dargestellt. Ebenso sehr ist denkbar, dass diese Information in Form eines graphischen Musters 33 im gleichen beschränkten Teilbereich ausgegeben wird, dazu kann die Darstellung «DataMatrix 2D barcode» verwendet werden. Diese Ausgabe von Mustern also von DataMatrix 2D barcode ist in der CH beispielsweise auch bekannt bei den sogenannten elektronisch bestellbaren Bahnbilletten, wo das Billett zuhause an einem Drucker ausgegeben werden kann und der Kondukteur mit einem Billettkontrollgerät dieses Muster erfasst. Das Kontrollgerät ist in der Lage, dieses Muster in Klartextinformation zu wandeln und an einem Anzeigemittel dieses Billettkontrollgerätes anzuzeigen.

Mit der vorgenannten Beschreibung von Ausführungsbeispielen für ein Kommunikationsgerät 3 ist unmittelbar auch ein Verfahren für sichere Online-Transaktionen entnehmbar. Erfindungswesentlich ist, dass die Verschlüsselung in einem Gerät 3 oder bevorzugt in einer Smartcard 10 stattfindet, die nicht Teil eines infizierten Rechners 1 sind. Dabei sind die Ausgaben am Bildschirm 30 des Rechners 1 verschlüsselt in Form eines Musters 33 wie z.B. DataMatrix 2D barcode oder eines alphanumerisch verschlüsselt dargestellten Textes 33. Die Eingaben für den Dienst-Anbieter 2 erfolgen über die Tastatur 30 via Gerät 3. Dabei sind die Daten ab Gerät 3 verschlüsselt, so dass Malware wie 21, 22, 24, 25 oder 26 im Rechner 1 zwar diese Daten immer noch an eine unbefugte Stelle weiterleiten, nicht aber manipulieren (=verfälschen) kann. Dadurch kann diese unbefugte Stelle wegen der Verschlüsselung nicht an die Klartextinformation 32 herankommen.

Bei einer allfälligen Manipulation kann aufgrund einer als ungültig zu erkennenden Benutzerinteraktion der Dienste-Anbieter 2 mit so empfangen Instruktionen nichts anfangen. Somit kann auch kein Schaden angerichtet werden.

Vorgenannt wurde speziell die USB-Strecke für die Verbindung 20, 14 zwischen Gerät 3, Tastatur 30 und infiziertem Rechner 1 genannt. Als wireless-Lösung bietet sich die standardisierte NFC-Technik an. Näheres zur USB-Technologie ist unter http://www.usb.org zu entnehmen.

Alternativ könnte auch die unter dem Label «Bluetooth» oder WLAN (WPA2/WPA2-PSK) bekannte Technologie eingesetzt werden.

### Liste der verwendeten Abkürzungen, Bezeichnungen und Akronyme

### Bluetooth

http://www,bluetooth.com :
Bluetooth wireless technology is a short-range communications technology intended to replace the cables connecting portable and/or fixed devices while maintaining high levels of security. The key features of Bluetooth technology are robustness, low power, and low cost. The Bluetooth specification defines a uniform structure for a wide range of devices to connect and communicate with each other.

### NFC Near Field Communication

http://www.nfc-forum.org :
The Near Field Communication (NFC) Forum is a non-profit industry association that promotes the use of NFC short-range wireless interaction in consumer electronics, mobile devices and PCs. The NFC Forum supports implementation and standardization of NFC technology to make it easier to get information, easier to pay for goods and services, easier to use public transport, and easier to share data between devices.

### SSL Secure Socket Layer

### USB Universal Serial Bus

http://www.usb.org

### TLS Transport Layer Socket

### WLAN Wireless Local Area Network

### WPA2 Wi-Fi Protected Access mit AES Verschlüsselung

### Liste der verwendeten Bezugszeichen

- 1: Rechner, kompromittierter Rechner
- 2: Dienste-Anbieter; Service-Provider
- 3: Kommunikationsgerät, Anzeigegerät
- 4: Am Kommunikationsgerät angezeigte Information
- 5: Anzeigemittel des Kommunikationsgerätes
- 7: Kartenleser
- 9: Dongle
- 10: Smartcard
- 11: Bedienelemente
- 12: biometrischer Sensor
- 13: Öffnungen für den Einschub einer Smartcard
- 14: Schnittstelle, z.B. USB
- 15: gesicherte Kommunikationsverbindung SSL/TLS
- 16: verschlüsselt, encrypted
- 17: ungeschützt, decrypted
- 18: gesicherte End zu Endverbindung
- 19: Übliche Verbindung Tastatur - Rechner
- 20: Alternative Verbindung Tastatur - Kommunikationsgerät - Rechner
- 21: HTTP-Filter, Teil von Malware
- 22: HTTP-Replace Engine, Teil von Malware
- 23: Anwendung, z.B. Browser
- 24: Key-Logger, Teil von Malware
- 25: Key-Replace-Engine, Teil von Malware
- 26: Videomaskierung, Teil von Malware
- 30: Tastatur
- 31: Bildschirm
- 32: am Bildschirm angezeigte Information in Klartext
- 33: am Bildschirm angezeigte Information in verschlüsselter Form; Muster
- 40: Benutzer, Person
- Att1, Att2, Att3: (logische) Zugangs- oder Angriffspunkte auf einen kompromittierten Rechner
- Att: Physischer Zugangs- oder Angriffspunkt von aussen über ein Port ausserhalb der gesicherten Kommunikationsverbindung.

### Liste der zitierten Dokumente

[1] EP 1 713 230 A1
   «System and method for providing user's security when setting-up a connection over insecure networks»
   AXSionics AG, 2502 Biel (CH)
   Berner Fachhochschule
   Hochschule für Technik und Architektur, 2501 Biel (CH)
[2] EP 1 255 178 B1
   «Dispositif de sécurité pour transaction en ligne»
   Berner Fachhochschule
   Hochschule für Technik und Architektur, 2501 Biel (CH)

## Patentansprüche

1. Verfahren für Online-Transaktionen zwischen einem Rechner (1) und einem Dienste-Anbieter (2), wobei der Rechner (1) mit einer Tastatur (30) und einem Bildschirm (31) verbunden (19) ist und ein Kommunikationsgerät (3) vorgesehen ist, das enthält:
- einen Kryptocontroller;
- ein Anzeigemittel (5);
- einen photoelektrischen Aufnehmer, um am Bildschirm (31) dargestellte Muster (33) zu empfangen;
- Mittel, die empfangenen Muster (33) in Klartext (4) zur Ausgabe am Anzeigemittel (5) mittels des Krypto-Controllers zu konvertieren;
**dadurch gekennzeichnet, dass**
die Tastatur (30) über das Kommunikationsgerät (3) mit dem Rechner (1) verbindbar ist, damit Dateneingaben an der Tastatur (30) mittels des Krypto-Controllers verschlüsselt ab Kommunikationsgerät (3) zum Dienste-Anbieter (2) übertragen werden.

2. Verfahren nach Anspruch 1,
**dadurch gekennzeichnet, dass**
der Krypto-Controller auf einer anwendungsspezifischen Smartcard (10) enthalten ist, wobei das Kommunikationsgerät (3) einen Kartenleser (7) aufweist, in den die Smartcard (10) einschiebbar und mit dem Kommunikationsgerät (3) verbindbar ist.

3. Verfahren für Online-Transaktionen zwischen einem Rechner (1) und einem Dienste-Anbieter (2), wobei der Rechner (1) mit einer Tastatur (30) und einem Bildschirm (31) verbunden (19) ist und ein Kommunikationsgerät (3) vorgesehen ist, das enthält:
- einen Krypto-Controller;
- ein Anzeigemittel (5);
- einen photoelektrischen Aufnehmer, um am Bildschirm (31) dargestellte Muster (33) zu empfangen;
- Mittel, die empfangenen Muster (33) in Klartext (4) zur Ausgabe am Anzeigemittel (5) mittels des Krypto-Controllers zu konvertieren;
**dadurch gekennzeichnet, dass**
die Tastatur (30) über einen Dongle (9) mit dem Rechner (1) verbindbar ist, damit Dateneingaben an der Tastatur (30) vom Dongle (9) verschlüsselt zum Dienste-Anbieter (2) übertragen werden.

4. Verfahren nach Anspruch 3,
**dadurch gekennzeichnet, dass**
der Krypto-Controller auf einer anwendungsspezifischen Smartcard (10) enthalten ist, wobei das Kommunikationsgerät (3) einen Kartenleser (7) aufweist, in den die Smartcard (10) einschiebbar und mit dem Kommunikationsgerät (3) verbindbar ist.

5. Verfahren nach Anspruch 1 oder 2,
**dadurch gekennzeichnet, dass**
die über das Kommunikationsgerät (3) geführte Verbindung von Tastatur (30) und Rechner (1) über eine USB-Schnittstelle (14, 20) erfolgt.

6. Verfahren nach Anspruch 1 oder 2,
**dadurch gekennzeichnet, dass**
die über das Kommunikationsgerät (3) geführte Verbindung (20, 14) von Tastatur (30) und Rechner (1) je über eine Funkstrecke erfolgt.

7. Verfahren nach Anspruch 3 oder 4,
**dadurch gekennzeichnet, dass**
der Dongle (9) am Rechner (1) eingesteckt ist und das Kommunikationsgerät (3) und die Tastatur (30) je über eine Funkstrecke (19, 14) verbunden ist.

8. Verfahren nach einem der Ansprüche 1 bis 7,
**dadurch gekennzeichnet, dass**
am Bildschirm (31) des Rechners (1) die Information für das Kommunikationsgerät (3) zusätzlich als Klartext (32) ausgegeben wird.

9. Kommunikationsgerät (3) zu einem Rechner (1) an den ein Bildschirm (31) und eine Tastatur (30) angeschlossen ist, wobei dieses Kommunikationsgerät (3) für Online-Transaktionen zwischen dem Rechner (1) und einem Dienste-Anbieter (2) vorgesehen ist und dieses Kommunikationsgerät (3) enthält:
- einen Krypto-Controller;
- ein Anzeigemittel (5);
- einen photoelektrischen Aufnehmer, um am Bildschirm (31) dargestellte Muster (33) zu empfangen;
- Mittel, die empfangenen Muster (33) in Klartext (4) zur Ausgabe am Anzeigemittel (5) mittels des Krypto-Controllers zu konvertieren;
**dadurch gekennzeichnet, dass**
das Kommunikationsgerät (3) je einen Anschluss (20, 14) aufweist, damit die Tastatur (30) des Rechners mit dem Rechner (1) verbindbar ist, um Dateneingaben an der Tastatur (30) mittels des Krypto-Controllers verschlüsselt ab Kommunikationsgerät (3) zum Dienste-Anbieter (2) zu übertragen.

10. Kommunikationsgerät (3) nach Anspruch 9,
**dadurch gekennzeichnet, dass**
der Krypto-Controller auf einer anwendungsspezifischen Smartcard (10) enthalten ist, wobei das Kommunikationsgerät (3) einen Kartenleser (7) aufweist, in den die Smartcard (10) einschiebbar und mit dem Kommunikationsgerät (3) verbindbar ist.

11. Kommunikationsgerät (3) nach Anspruch 9 oder 10,
**dadurch gekennzeichnet, dass**
je eine USB-Strecke (20, 19) für die Verbindung von Tastatur (30) mit dem Rechner (1) vorgesehen ist.

12. Kommunikationsgerät (3) nach Anspruch 9 oder 10,
**dadurch gekennzeichnet, dass**
je eine Funk-Strecke (20, 19) für die Verbindung von Tastatur (30) mit dem Rechner (1) vorgesehen ist.

13. Kommunikationsgerät (3) nach Anspruch 7
**dadurch gekennzeichnet, dass**
der je eine Anschluss eine Antenne für eine Funkstreckenverbindung beinhaltet.

14. Kommunikationsgerät (3) nach Anspruch 9
**dadurch gekennzeichnet, dass**
die Funkstrecke nach dem NFC-Standard ausgebildet ist.
